# EUROPÄISCHE PATENTANMELDUNG

(11) **EP 1 231 493 A2**
(43) Veröffentlichungstag der Anmeldung: **14.08.2002**
(21) Anmeldenummer: 02360036.4
(22) Anmeldetag: 21.01.2002
(51) Int. Cl.: G02B 6/50

(54) **Verfahren zur Reinigung eines Glasfaserkabels vor dessen Verlegung**

(30) Priorität: 08.02.2001 DE 10105735
(71) Anmelder: ALCATEL, 75008 Paris (FR)
(72) Erfinder: Nothofer, Klaus, 40699 Erkrath (DE); Leppert, Hans-Detlef, 41189 Mönchengladbach (DE); Lysson, Hans-Jürgen, 41352 Korschenbroich (DE); Teschner, Wolfgang, 31515 Wunstorf (DE)
(74) Vertreter: Rausch, Gabriele, Dr.

(57) **Zusammenfassung**

Bei einem Verfahren zur Verlegung eines Kabels (1) oder eines Rohres zum späteren Einführen eines Kabels in einer Frischwasserleitung (6) wird die Oberfläche des Kabels (1) oder des Rohres während des Verlegeprozesses unmittelbar vor dem Eintritt (5) in die Frischwasserleitung (6) gereinigt.

## Beschreibung

Die Erfindung betrifft ein Verfahren zur Verlegung eines Kabels oder Rohres in eine Frischwasserleitung nach dem Oberbegriff des Anspruchs 1 sowie eine Vorrichtung zur Durchführung des Verfahrens.

Im Zuge der Errichtung neuer Kabelanlagen für die Telekommunikation durch regionale und kommunale Unternehmen wird in zunehmendem Maße aus wirtschaftlichen und/oder organisatorischen Gründen über Alternativlösungen zur herkömmlichen Verlegung von Telekommunikationskabeln unmittelbar im Erdreich nachgedacht. Eine sich insbesondere aus wirtschaftlichen Gründen anbietende alternative Verlegetechnik für Telekommunikationskabel ist die Nutzung von im Rohr- bzw. Kanalnetz eines Versorgungssystems einer Stadt oder einer Ortschaft vorhandenen Gas- und Wasserleitungen.

Eine solche Lösung ist in der DE 30 01 226 A1 beschrieben. Neben der Reduzierung der Kosten zum Aufbau eines städtischen oder regionalen Telekommunikationsnetzes sind durch die Nutzung der vorhandenen Leitungen nur in geringem Umfang Erdarbeiten erforderlich, so daß der insbesondere in Städten oft enge Verkehrsraum wenig beeinträchtigt wird. Zudem stellt bei dieser neuen Verlegetechnik die in vielen Fällen bereits dichte Trassenbelegung mit Leitungen aller Ver- und Entsorgungssparten kein wesentliches Problem dar, sondern kann sogar von Vorteil sein.

Zum Aufbau eines Telekommunikationsnetzes unter Verwendung von einen vergleichsweise kleinen Außendurchmesser aufweisenden optischen Kabeln einschließlich der Anbindungsmöglichkeit für später zuzuschaltende Teilnehmer bietet sich daher aus technischen und organisatorischen Gründen sowie aus Gründen des Wegerechts die Verlegung von optischen Nachrichtenkabeln in Frischwasserleitungen des vorhandenen Versorgungsnetzes an. Dabei ist größter Wert auf die Trinkwasser-Neutralität des Kabelmaterials, insbesondere des Kabelmantels, sowie auf die Längswasserdichtheit und eine dauerhaft sichere Permeationssperre des Kabels gegenüber Wasserdampf zu legen. Darüber hinaus ist beim Einführen des Kabels in die Leitung durch besondere Sorgfalt dafür zu sorgen, daß in der Leitung keine Verkeimung oder andere mikrobiologischen Verunreinigungen auftreten.

Eine zusätzliche Schwierigkeit bei der Verlegung von Kabeln in Trinkwasserleitungen besteht darin, daß in Trinkwasserleitungen in Abständen von etwa 150 bis 250 m Schieber oder andere Absperrvorrichtungen zum Absperren der Frischwasserleitung angeordnet sind. An diesen Absperrstellen muß das Kabel ohne irgendwelche Beeinträchtigungen mechanischer oder optischer Art um den Schieber herumgeführt werden, indem das Kabel vor dem Schieber aus der rohrförmigen Leitung herausgeführt und hinter dem Schieber wieder in die rohrförmige Leitung eingeführt wird. Zudem ist es auch für die Erstellung von Teilnehmeranschlüssen oder Abzweigen erforderlich, ein optisches Kabel aus der rohrförmigen Leitung heraus oder in die rohrförmige Leitung hinein zu führen.

In der DE 297 22 107 U1 ist eine Vorrichtung zum Einführen und/oder Herausführen eines Kabels, insbesondere eines optischen Nachrichtenkabels, in eine bzw. aus einer Frischwasserleitung beschrieben. Diese Vorrichtung weist ein an der Frischwasserleitung befestigtes flanschartiges Gehäuse, zumindest ein in dem Gehäuse angeordnetes und in die Leitung ragendes Führungsrohr zum Hindurchführen des Kabels durch eine durch die Wandung der Leitung hindurchgehende Durchgangsbohrung sowie zumindest ein in dem Gehäuse angeordnetes, das hindurchgeführte Kabel dicht umschließendes Dichtelement auf.

Bei dieser Vorrichtung kann es unter Umständen dazu kommen, daß sich insbesondere nach der Installation im oberen, in das Gehäuse ragenden Ende des Führungsrohrs Luft in Form von Luftpolstern ansammelt, die nicht entweichen kann. Diese dauerhaft stehende Luft begünstigt die Bakterienvermehrung im Führungsrohr. In Frisch- bzw. Trinkwasserleitungen sollten diese stehenden Luftpolster unbedingt vermieden werden.

In dem DE-U-29 821 504 wird dieses Problem dadurch gelöst, daß das Führungsrohr an seinem in das Gehäuse ragenden Ende wenigstens eine durch seine Wandung hindurchgehende Öffnung hat.

Durch die durch die Wandung des Führungsrohrs hindurchgehende Bohrung kann Luft aus dem in das Gehäuse ragenden oberen Ende des Führungsrohrs entweichen und das in der Leitung transportierte Frischwasser kann das gesamte Führungsrohr ausfüllen. Auf diese Weise wird das Ansammeln von dauerhaft stehender Luft und die Bildung eines Luftpolsters im Führungsrohr, die die Vermehrung von Bakterien begünstigen, zuverlässig vermieden.

Bei den bekannten Vorschlägen kann der Eintrag von Keimen, Bakterien und anderen Verunreinigungen in Frischwasserleitungen nicht vermieden werden.

Der vorliegenden Erfindung liegt von daher die Aufgabe zugrunde, das eingangs erwähnte Verfahren dahingehend zu verbessern, daß ein Einbringen von Keimen, Bakterien sowie Verunreinigungen weitestgehend vermieden wird.

Diese Aufgabe wird durch die im Kennzeichen des Anspruchs 1 erfaßten Merkmale gelöst.

Nach einer besonders vorteilhaften Ausgestaltung der Erfindung ist vorgesehen, das Reinigen mit einer Flüssigkeit vorzugsweise Wasser, die unter hohem Druck auf die Oberfläche des Kabels oder des Rohres gerichtet ist, durchzuführen. Alternativ oder auch zusätzlich kann die Oberfläche des Kabels oder Rohres mit rotierenden Bürsten gereinigt werden. Diese mechanischen Arbeitsweisen ermöglichen die Entfernung von Schmutz und Staub. Um Fette oder andere auf der Oberfläche des Kabels oder Rohres befindlichen organischen Stoffe zu entfernen, ist es sinnvoll bzw. notwendig, der Flüssigkeit entsprechende Lösungsmittel beizugeben, die jedoch wasserlöslich sein sollten und das Trinkwasser nicht kontaminieren. Nach dieser groben mechanischen Behandlung wird die Oberfläche des Kabels oder Rohres intensiv gespült, um Reste von Staub, Schmutz aber auch Lösungsmittel abzuspülen.

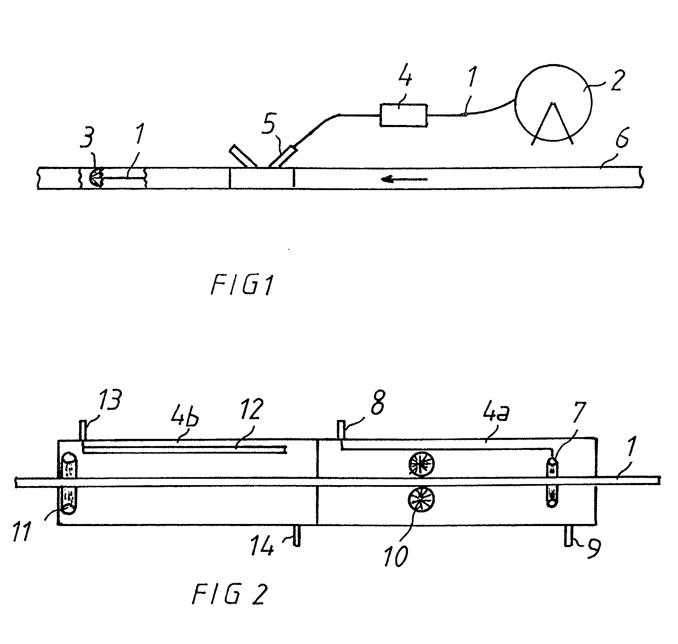

Die Erfindung ist anhand der in den Figuren 1 und 2 schematisch dargestellten Ausführungsbeispiele erläutert.

Obwohl das erfindungsgemäße Verfahren bzw. auch die Vorrichtung für Kabel und Rohre, in die nachträglich ein Nachrichtenkabel eingelegt werden kann, anwendbar ist, wird im Folgenden nur auf ein Kabel Bezug genommen.

Das Kabel 1 wird auf einer Spule 2 am Verlegeort angeliefert. Zunächst wird am Anfang des Kabels 1 ein Schirm 3 befestigt, und das Kabel 1 durch die im Folgenden näher beschriebenen Vorichtung 4 hindurchgeführt und durch den Ansatz 5 in eine Frischwasserleitung 6 eingebracht. Das in Pfeilrichtung geförderte Trinkwasser bläht den Schirm 3 auf, wodurch das Kabel 1 von der Spule 2 abgezogen und in der Trinkwasserleitung 6 verlegt wird.

Um ein Einbringen von Schmutz, Staub oder anderen das Trinkwasser kontaminierenden Stoffe in die Trinkwasserleitung 6 zu verhindern, wird das Kabel 1 in der Vorrichtung 4 im Durchlauf intensiv gereinigt.

Die Vorrichtung 4 besteht ― siehe Figur 2 ― aus einer ersten Kammer 4a sowie einer zweiten Kammer 4b, die jeweils eine nicht näher bezeichnete Eintritts- und Austrittsöffnung für das in Pfeilrichtung transportierte Kabel 1 aufweisen. Eintritts- und Austrittsöffnung weisen Durchmesser auf, die in etwa dem Außendurchmesser des Kabels 1 entsprechen. Nicht dargestellte Ringdichtungen an den Eintritts- und Austrittsöffnungen verhindern, daß unerwünschte Stoffe in das Innere der Kammer 4a und 4b gelangen und das Reinigungsmittel austritt. In der Kammer 4a ist in Durchlaufrichtung des Kabels 1 gesehen zunächst eine Sprühanordnung 7 vorgesehen, die aus mehreren einzelnen über den Umfang des Kabels 1 verteilt angeordneten nicht näher bezeichneten Sprühdüsen besteht, mit denen eine Sprühflüssigkeit mit hohem Druck auf die Oberfläche des Kabels 1 gesprüht wird. Die Sprühflüssigkeit ist vorzugsweise Frischwasser, dem geeignete Lösungsmittel für an der Kabeloberfläche haftende organische Stoffe wie z. B. Fett, Wachs etc. sowie ein keimfrei machendes Mittel zugesetzt sind. Die frische Spülflüssigkeit gelangt über einen Einlaß 8 zu der Sprühanordnung 7 und die verschmutzte Spülflüssigkeit tritt über den Auslaß 9 aus der Kammer 4a aus.

Hinter der Sprühanordnung ist eine Bürstvorrichtung 10 mit mehreren mit hoher Geschwindigkeit angetriebenen über den Umfang des Kabels 1 verteilten nicht näher bezeichneten Bürsten angeordnet, welche hartnäckigen Schmutz von der Kabeloberfläche entfernen.

In Abänderung der aus der Sprühvorrichtung 7 und der Bürstvorrichtung 10 bestehenden Anordnung kann auch eine Bürstvorrichtung wie beschrieben vorgesehen werden, die von einem Hochdruckwasserstrahl angetrieben wird, der gleichzeitig schräg an die Oberfläche des Kabels 1 auftrifft.

Hinter der Kammer 4a befindet sich die Kammer 4b, in welcher eine oder mehrere Ringdüsen 11 bzw. ein Sprinklerrohr 12 angeordnet sind, welche Frischwasser auf die Kabeloberfläche sprühen und somit Partikel, die trotz der Behandlung in Kammer 4a auf der Kabeloberfläche haften, vollständig entfernen. Das über den Zulauf 13 der Ringdüse 11 bzw. dem Sprinklerrohr 12 zugeführte Frischwasser wird über den Ablauf 14 abgeleitet.

## Patentansprüche

1. Verfahren zur Verlegung eines Kabels oder eines Rohres zum späteren Einführen eines Kabels in einer Frischwasserleitung insbesondere eines optischen Nachrichtenkabels, **dadurch gekennzeichnet, daß** die Oberfläche des Kabels oder des Rohres während des Verlegeprozesses unmittelbar vor dem Eintritt in die Frischwasserleitung gereinigt wird.

2. Verfahren nach Anspruch 1, **dadurch gekennzeichnet, daß** die Oberfläche des Kabels oder des Rohres mit einem unter hohem Druck auf die Kabeloberfläche gerichteten Flüssigkeitsstrahl gereinigt wird.

3. Verfahren nach Anspruch 1, **dadurch gekennzeichnet, daß** die Oberfläche des Kabels oder des Rohres mit rotierenden Bürsten gereinigt wird.

4. Verfahren nach einem der Ansprüche 1 bis 3, **dadurch gekennzeichnet, daß** die Oberfläche des Kabels oder des Rohres mit einem Flüssigkeitsstrahl sowie durch Bürsten gereinigt wird.

5. Verfahren nach einem der Ansprüche 1 bis 4, **dadurch gekennzeichnet, daß** der Flüssigkeit fettlösende sowie keimtötende Mittel zugesetzt werden, wobei die Mittel in Wasser löslich sind.

6. Verfahren nach einem der Ansprüche 1 bis 6, **dadurch gekennzeichnet, daß** die Oberfläche des Kabels oder des Rohres nach dem Reinigen mit klarem Wasser gespült wird.

7. Verfahren nach einem der Ansprüche 1 bis 6, **dadurch gekennzeichnet, daß** das Kabel oder das Rohr mittels eines am Kabelanfang befestigten ball-, ballon- oder fallschirmartigen Elements, welches durch das in der Frischwasserleitung geförderte Frischwasser vorwärtsgetrieben wird, in die Frischwasserleitung eingezogen wird.

8. Vorrichtung zur Durchführung des Verfahrens nach einem der Ansprüche 1 bis 7, **gekennzeichnet durch** ein Gehäuse (4) mit zumindest zwei Kammern (4a,4b) mit je einer Eintrittsöffnung und einer Austrittsöffnung für das zu reinigende Kabel (1) oder Rohr, wobei die erste Kammer (4a) Mittel zur mechanischen Reinigung der Oberfläche des Kabels (1) oder des Rohres aufweist und die zweite Kammer (4b) zumindest eine Spülvorrichtung aufweist.

9. Vorrichtung nach Anspruch 8, **dadurch gekennzeichnet, daß** in der ersten Kammer (4a) mehrere an der Oberfläche des Kabels (1) oder des Rohres angreifende mit hoher Geschwindigkeit rotierende Bürsten angeordnet sind.

10. Vorrichtung nach Anspruch 8 oder 9, **dadurch gekennzeichnet, daß** in der ersten Kammer (4a) ein Zu- und ein Ablauf (8,9) für eine die Oberfläche des Kabels (1) oder des Rohres befeuchtende Reinigungsflüssigkeit vorgesehen sind.

11. Vorrichtung nach Anspruch 10, **dadurch gekennzeichnet, daß** ein oder mehrere die Reinigungsflüssigkeit gegen die Oberfläche des Kabels (1) oder Rohres sprühende Ringdüsen (7) vorgesehen sind.

12. Vorrichtung nach einem der Ansprüche 8 bis 11, **dadurch gekennzeichnet, daß** in der zweiten Kammer (4b) ein Zu- und ein Ablauf (13,14) für eine Spülflüssigkeit vorgesehen sind.

13. Vorrichtung nach Anspruch 12, **dadurch gekennzeichnet, daß** eine oder mehrere die Spülflüssigkeit auf die Oberfläche des Kabels (1) oder Rohres sprühende Ringdüsen (11) in der zweiten Kammer (4b) vorgesehen sind.
